# DEMANDE DE BREVET EUROPEEN

(11) **EP 0 570 310 A1**
(43) Date de publication de la demande: **18.11.1993**
(21) Numéro de dépôt: 93420194.8
(22) Date de dépôt: 13.05.1993
(51) Int. Cl.: H02H 9/04, H02H 1/00, H02H 3/04

(54) **Générateur de signal pour la télé-détection des défauts de fonctionnement des parafoudres montés sur les lignes électriques de distribution**

(30) Priorité: 15.05.1992 FR 9206158
(71) Demandeur: SOCIETE INDUSTRIELLE DE MATERIEL ELECTRIQUE SIMEL, F-21220 Gevrey Chambertin (FR)
(72) Inventeur: Mainier, Louis, F-21000 Dijon (FR)
(74) Mandataire: Monnier, Guy

(57) **Abrégé**

Le générateur de signal comprend, pour l'alimentation d'un circuit d'émission (25-25a) d'un signal codé dont l'entrée en fonctionnement est placée sous la dépendance d'un organe de déclenchement (31) lié à l'élément éjectable d'au moins un parafoudre, un circuit de puissance qui incorpore un condensateur de couplage (19) présentant une très forte impédance à la fréquence nominale de la ligne à laquelle il est relié, mais au contraire une faible impédance à une fréquence plus élevée, de façon à ce que le signal codé finalement émis soit transmis au poste-source par la ligne elle-même ou par la terre.

## Description

La présente invention a trait aux parafoudres qui équipent les lignes électriques de distribution à moyenne tension destinées à l'alimentation des réseaux d'utilisation.

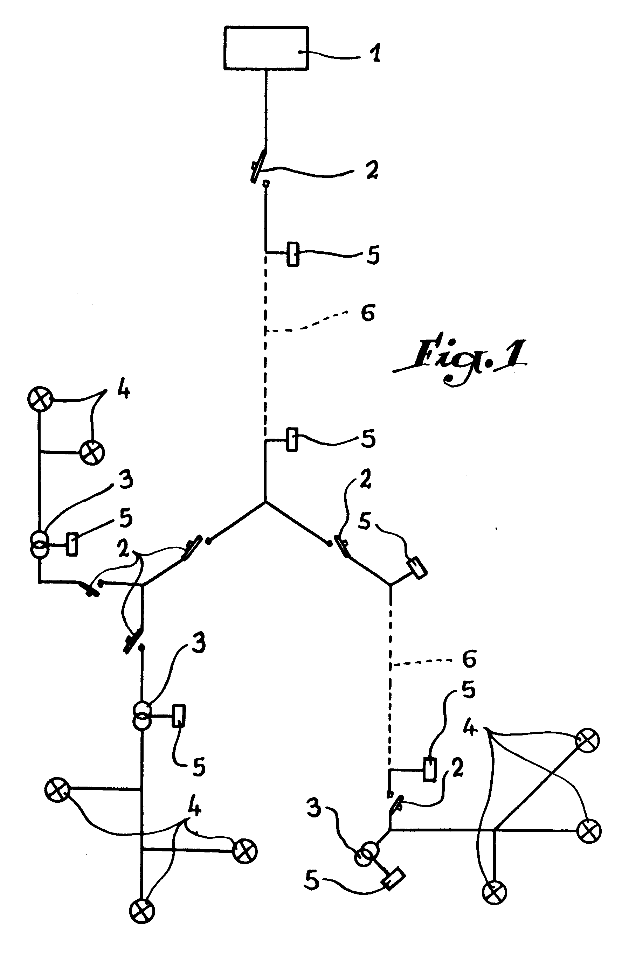

On sait que le nombre des parafoudres montés sur une même ligne est très élevé. Ainsi qu'on l'a très schématiquement illustré à la fig. 1 du dessin annexé aux présentes, laquelle est un schéma très partiel du tracé d'une ligne classique, un poste source 1 alimente, à travers des disjoncteurs-sectionneurs 2, une série de transformateurs 3 dont chacun est relié à un ou plusieurs utilisateurs 4. Trois parafoudres 5 sont associés à chacun de ces transformateurs 3 ; en outre trois parafoudres 5 sont encore prévus à chacune des extrémités des portions souterraines 6 de la ligne.

Pour la réalisation des parafoudres 5, on a à l'heure actuelle généralement recours à des pastilles céramiques d'oxyde de zinc (ZnO) ou de carbure de silicium, qui sont empilées sous pression entre deux électrodes de connexion prévues aux extrémités d'une enveloppe isolante de contention. Or l'expérience a démontré que la durée de vie d'un tel parafoudre est limitée par la céramique elle-même, laquelle devient conductrice après avoir encaissé un trop grand nombe de coups de foudre. Le parafoudre est alors à l'origine d'un courant de fuite même dans les conditions normales de courant et de tension, ce qui évidemment ne peut être toléré par l'exploitant.

Ce dernier est en conséquence confronté à deux problèmes, à savoir d'une part la détection de l'apparition, sur la ligne, du défaut provoqué par un parafoudre défaillant, d'autre part l'identification exacte de ce parafoudre défaillant en vue de son remplacement.

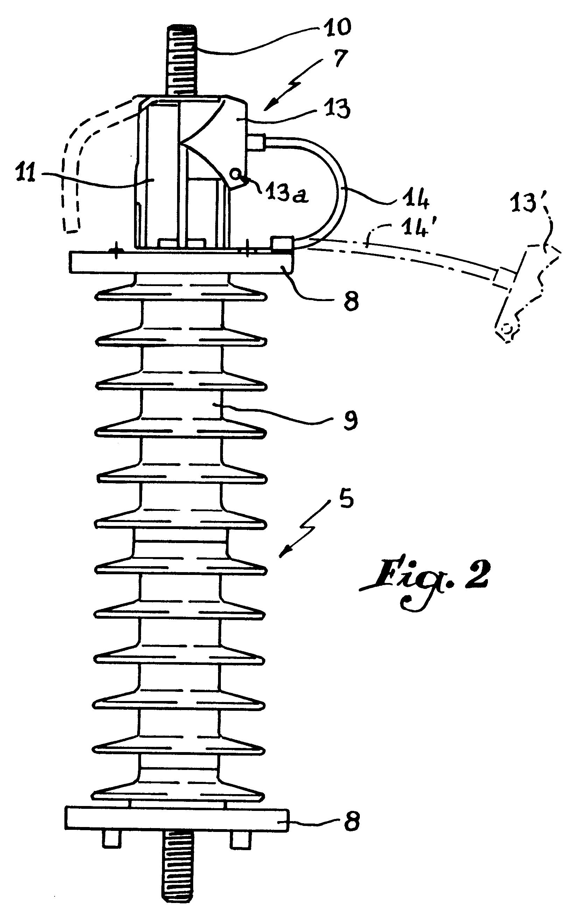

Actuellement la détection du défaut sur la ligne est opérée par repérage du courant de court-circuit. Pour le second problème relatif à l'identification du parafoudre défaillant, on a proposé de doter les appareils d'un dispositif dénommé de signalisation de défaut 7 qui permet à un observateur situé à au plus 30 mètres de désigner visuellement le parafoudre qui est en défaut. A la manière illustrée à la fig. 2 du dessin annexé, un tel signalisateur 7 est fixé à l'une des platines d'extrémités 8 prévues de part et d'autre de l'enveloppe isolante 9 du parafoudre 5 pour supporter les pièces 10 qui assurent la connexion de l'appareil à l'une des phases de la ligne et à la terre. L'une de ces pièces 10 est donc fixée au corps 11 du signalisateur 7, lequel est pourvu d'un élément éjectable 13 relié par une tresse souple 14 à ladite platine 8.

En utilisation normale, l'ensemble 13-14 assure la jonction entre la pièce 10, qu'on supposera reliée à l'une des phases de la ligne à protéger, et l'empilage de pastilles céramique renfermé par l'enveloppe 9. Si la foudre tombe sur la phase envisagée, la surtension s'applique à l'empilage précité à travers l'ensemble 13-14. Si cet empilage est défaillant, le courant de fuite provoque la mise à feu d'une petite charge explosive logée dans le corps 11 du signalisateur 7, ce qui a pour effet d'expulser latéralement l'elément 13, l'ensemble 13-14 précité affectant alors la position qui a été représentée en 13'-14' .

Un tel système est avantageux, puisqu'il permet l'identification du parafoudre qui est en défaut moyennenant observation visuelle de la position de l'ensemble 13'-14' .

En outre il oblige l'exploitant de la ligne à procéder au remplacement du parafoudre défectueux avant la remise sous tension de ladite ligne.

Toutefois, à ces avantages correspond un inconvénient sensible, lié au fait que la signalisation de défaut entraîne une coupure de longue durée (temps nécessaire à un observateur pour le contrôle visuel de l'ensemble des parafoudres de la ligne) privant les utilisateurs du service attendu.

C'est à ce problème du maintien de l'indication de défaut des parafoudres sans coupure de service que la présente invention entend apporter une solution, et ce à l'aide d'un générateur de signal électrique propre à faire remonter l'information de défaut d'un parafoudre déterminé jusqu'au poste-source qui alimente le tronçon portant ledit parafoudre ainsi identifié, étant observé que le générateur en question est associé à un déconnecteur de signalisation de sorte que le fonctionnement de ce dernier provoque l'émission du signal et isole le parafoudre défectueux de la terre.

Le générateur de signal suivant l'invention est défini à la revendication 1.

L'originalité principale de ce générateur réside dans le fait qu'il comprend, pour l'alimentation permanente d'un circuit d'émission d'un signal codé dont l'entrée en fonctionnement est placée sous la dépendance d'un organe de déclenchement lié à l'élément éjectable d'au moins un parafoudre, un circuit de puissance qui incorpore un condensateur de couplage présentant une très forte impédance à la fréquence nominale de la ligne considérée à laquelle il est relié, mais au contraire une faible impédance à une fréquence plus élevée, de façon à ce que le signal codé finalement émis soit transmis au poste-source par la ligne elle-même ou par la terre.

Le dessin annexé, donné à titre d'exemple, permettra de mieux comprendre l'invention, les caractéristiques qu'elle présente et les avantages qu'elle est susceptible de procurer :

Comme indiqué ci-dessus, fig. 1 est un schéma illustrant partiellement le tracé d'une ligne classique équipée de parafoudres, tandis que fig. 2 montre en élévation un parafoudre classique du type à déconnecteur signalisateur de défaut.

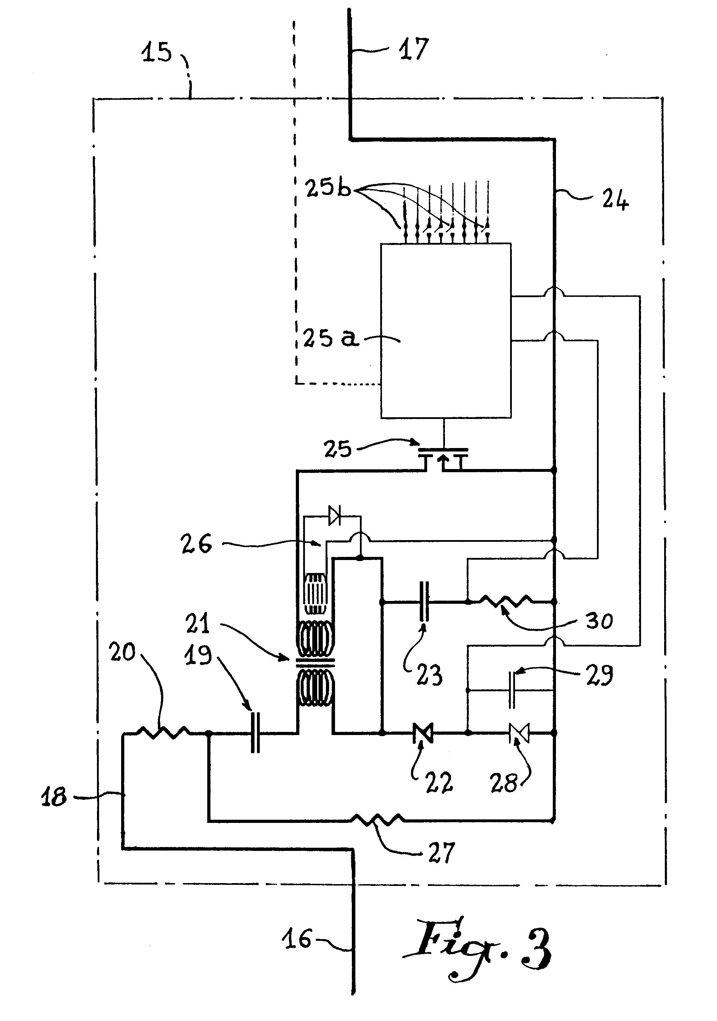

Fig. 3 représente le schéma d'un générateur de signal établi conformément à la présente invention.

Fig. 4 à 6 illustrent trois modes différents de branchement du générateur suivant fig. 3 sur la ligne protégée.

Ce générateur comprend un circuit de puissance pour l'alimentation d'un circuit d'émission de signal.

Du boîtier 15 de ce générateur sortent deux bornes de branchement 16 et 17. Par un conducteur 18 la borne 16 alimente un condensateur 19 qui est monté en série avec une résistance de protection anti-surtension 20 et qui est relié, également en série, au primaire d'un transformateur d'isolement 21. En série avec le condensateur 19, dont l'impédance est très forte à la tension nominale, est prévue une diode Zener 22 pour le chargement d'un condensateur 23 alimenté à travers le secondaire du transformateur 21 et propre à former résevoir d'énergie. Ce condensateur 23 est relié au conducteur 24 branché à la borne 17 afin d'aboutir, en même temps que le secondaire du transformateur 21, à un MOS de puissance 25.

Le circuit de puisance comprend encore un circuit 26 pour la démagnétisation du transformateur 21, ainsi qu'une varistance 27 placée entre la borne du condensateur 19 côté résistance 20 (liée à la borne 16) et le conducteur 24 (lié à la borne opposée 17).

Le circuit d'émission de signal comprend, outre le MOS 25, un circuit 25a à basse-tension (5 Volts par exemple) alimenté par sa propre alimentation basse-tension. Cette dernière est constituée par une diode Zener 28 branchée en série avec la diode 22 (ces deux diodes 22 et 28 étant du type "transorb"), et par un condensateur ou capacité 29 branché en parallèle avec ladite diode 28. Ce circuit basse-tension 25a pour la commande du MOS 25 est cadencé sur la fréquence nominale de la ligne envisagée, la tension étant par exemple prélevée aux bornes d'une résistance 30 située dans la branche du condensateur 23.

Le circuit de commande 25a, équipé d'interrupteurs de réglage 25b pour le codage précis du signal émis, est alimenté en permanence par le circuit de puissance précité, mais son fonctionnement est initié à l'aide d'un organe de déclenchement 31 placé sous la dépendance du déconnecteur 7 d'au moins un parafoudre 5. En fait, pour des raisons évidentes d'économie, on prévoit un générateur pour tous les parafoudres 5 qui équipent un même transformateur 3 de la ligne ou une même extrémité de chaque portion souterraine 6 de celle-ci.

Sur les schémas de branchement illustrés en fig. 4, 5 et 6, les références 32, 33 et 34 désignent les trois phases d'une ligne triphasée classique et l'on obsevera que dans les trois solutions envisagées, l'organe de déclenchement 31 est constitué par un élément mécanique en forme de conducteur électrique, de lien souple ou de fibre optique qui, est successivement engagé à travers un oeillet 13a (voir fig. 2) ménagé dans l'élément éjectable 13 de chacun des trois parafoudres 5 équipant la Ligne au point 3 ou 6 considéré.

On conçoit sans peine que si l'un quelconque de ces trois parafoudres 5 est défaillant à la suite d'un coup de foudre, l'éjection de son élément 13 va avoir pour effet de sectionner l'organe 31 et de provoquer ainsi le déclenchement du fonctionnement du circuit 25a du générateur qui équipe le point de ligne considéré.

Dans ces conditions ce générateur va émettre, à une fréquence plus élevée que la nominale, un signal codé qui sera transmis au poste-source 1 de la ligne par l'une des phases 32, 33 ou 34 et/ou la terre elle-même, et ce à travers le condensateur 19 qui, à la fréquence d'émission choisie, présente une impédance très faible. Ce signal codé informe le poste-source 1 d'une part de la défaillance de l'un des parafoudres 5 (cette information d'existence se maintenant jusqu'à intervention manuelle au niveau du parafoudre défaillant), d'autre part de l'identité exacte du parafoudre qui est à remplacer.

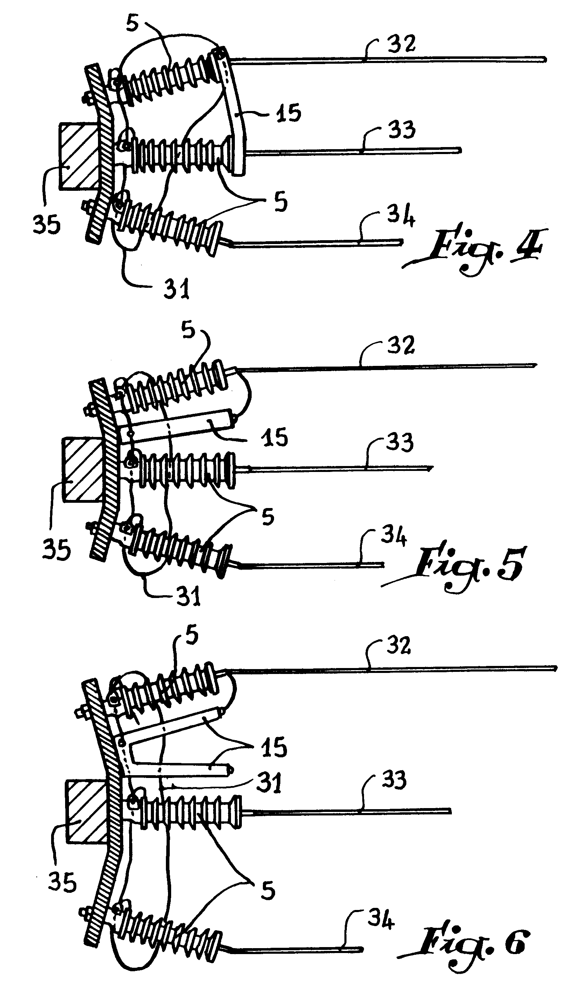

Les trois modes de branchement du générateur tels qu'illustrés en fig. 4 à 6 présentent des inconvénients et des avantages respectifs :
- en fig. 4 les bornes 16 et 17 du générateur ont été supposées branchées sur les phases 32 et 33, de sorte que l'impédance de la ligne, parfaitement connue, permet d'adopter une puissance inférieure tout en obtenant une transmission d'excellente qualité ; par contre le boîtier 15 n'est pas mis à la masse, ce qui peut gêner les opérations de branchement.
- en fig. 5 les bornes 16 et 17 du générateur sont reliées à la phase 32 et à la terre par l'intermédiaire du poteau-support 35, ce qui facilite les opérations de branchement, en même temps que le coût reste bas ; par contre l'impédance est mal définie car la conductivité du sol est mal connue, et le plus grand éloignement des conducteurs conduit à davantage de rayonnement électromagnétique à proximité de la ligne
- enfin en fig. 6 le générateur est agencé sous forme double pour alimenter en opposition de phases les deux lignes formées de la terre et des phases 32 et 33 tout en étant mis à la masse à travers le poteau-support 35. On combine tous les avantages cidessus évoqués, mais le coût de fabrication est évidemment plus élevé.

Dans tous les cas le générateur ne renferme aucune source autonome de courant ni quartz puisque son alimentation est directement tirée de la fréquence de la ligne protégée qui fournit à la fois la tension d'alimention du circuit de commande et la fréquence de référence.

On conçoit que la liaison entre l'organe de déclenchement 31 et l'élément éjectable 13 de chaque parafoudre peut être opérée de toute manière appropriée (connecteur, vis, collage, etc...), le système d'oeillet 13a n'ayant été retenu qu'à titre illustratif.

## Revendications

1. Générateur de signal pour la télé-détection des défauts de fonctionnement affectant les parafoudres montés sur une même ligne de distribution électrique à moyenne tension, chaque parafoudre (5) comportant à la façon connue un élément (13) qui est éjecté sous l'effet du courant de fuite susceptible d'apparaître en cas de défaillance du parafoudre envisagé, caractérisé en ce qu'il comprend en combinaison :
- un circuit de puissance intégrant un condensateur de couplage (19) qui à la fréquence de la tension nominale de la ligne protégée présente une très forte impédance, mais au contraire une faible impédance à une fréquence plus élevée, ledit condensateur étant directement branché entre deux phases (32 et 33) de ladite ligne ou entre l'une desdites phases et la terre (35) et un condensateur-réservoir d'énergie (23) protégé par une diode Zener (22) ;
- un circuit d'émission de signal qui comprend un MOS (25) relié au circuit de puissance précité pour délivrer, au moment opportun et à une fréquence plus élevée que la fréquence nominale de la ligne protégée, des impulsions codées à cette ligne elle-même ;
- et un organe de déclenchement (31) qui est lié à l'élément éjectable (13) d'au moins un parafoudre (5) en vue d'actionner le MOS (25) et d'initier l'émission du signal si le parafoudre correspondant (5) est défaillant.

2. Générateur suivant la revendication 1, caractérisé en ce que le circuit de puissance comprend une résistance de protection (20) branchée en série avec le condensateur (19).

3. Générateur suivant l'une quelconque des revendications 1 et 2, caractérisé en ce que le condensateur (19) est branché en série avec le primaire d'un transformateur d'isolement (21) dont le secondaire est branché en série avec le MOS (25).

4. Générateur suivant l'une quelconque des revendications 1 à 3, caractérisé en ce qu'une varistance (27) est placée entre l'une (16) des bornes de connexion du générateur, en amont du condensateur (19), et la borne opposée (17).

5. Générateur suivant l'une quelconque des revendications 2 à 4, caractérisé en ce que le circuit d'émission de signal comprend un circuit intégré (25a) alimenté sous une très faible tension par sa propre alimentation en fréquence, laquelle intègre une diode Zener (28) montée en série avec la diode Zener (22) du circuit de puissance, et un condensateur (29) monté en parallèle avec cette diode (28).

6. Générateur suivant la revendication 5, caractérisé en ce que la fréquence qui est cadencée par le circuit intégré (25a) est prélevée aux bornes d'une résistance (30) située dans la branche du condensateur (23).

7. Générateur suivant l'une quelconque des revendications 5 et 6, caractérisé en ce que le circuit intégré (25a) est doté d'interrupteurs (25b) pour le codage précis du signal émis.

8. Générateur suivant l'une quelconque des revendications 1 à 7, caractérisé en ce que l'organe de déclenchement (31) est constitué par un conducteur électrique, un lien ou une fibre optique relié mécaniquement à l'élément éjectable (13) d'au moins un parafoudre (5) de façon à être sectionné lors du fonctionnement du déconnecteur.

9. Générateur suivant la revendication 9, caractérisé en ce que son organe de déclenchement (31) est assujeti à l'ensemble des parafoudres qui équipent un même poste.
